# EUROPEAN PATENT APPLICATION

(11) **EP 4 050 308 A1**
(43) Date of publication of application: **31.08.2022**
(21) Application number: 21020514.2
(22) Date of filing: 14.10.2021
(51) Int. Cl.: G01F 15/061, G01F 1/00

(54) **MODULE FOR WIRELESS DATA TRANSMISSION FROM FLOW METERS**

(30) Priority: 24.02.2021 CZ 202138582 U
(71) Applicant: Bílek, Stepán, 291 28 Krokovany (CZ); Dub, Jaroslav, 418 01 Bílina (CZ)
(72) Inventor: Bílek, Stepán, 291 28 Krokovany (CZ); Dub, Jaroslav, 418 01 Bílina (CZ)
(74) Representative: Kolator, Kamil

(57) **Abstract**

A module for wireless data transmission from a flow meter, consisting of a control board equipped with a processor for data processing and calculation based on created software, where the processor includes internal memory, further equipped with an adapter for radio network reception and for wireless connection of the module with computer or mobile platform in which the software in the form of a mobile application is installed. The solution enables the connection of three common electronic flow meters, while the measured values are processed by a processor with internal memory and this data is transmitted to a PC or mobile platform via a radio connection.

## Description

### Field of technology

The technical solution relates to a device which is adapted for connection of three conventional electronic flow meters from which the recorded data are transmitted wirelessly - via radio networks - to a mobile device or computer.

### Prior art

The current market offers a large number of differently designed and variously usable flow meters. There are a number of mechanical as well as electronic, inductive and ultrasonic flow meters, which also allow data on the flow of liquids or gases to be transmitted wirelessly.

The disadvantage of all existing is their specification of use without the possibility of measuring three setpoints simultaneously.

The term "connectivity" or "connection" is a general term for connecting various components such as flow meters or electrical networks, not just as often used today to connect to the Internet.

### Disclosure of the solution

The technical solution described by this utility model enables the connection of three common electronic flow meters, while the measured values are processed by a processor with internal memory and this data is transmitted to a PC or mobile platform via a radio connection.

The hardware of the described module therefore consists of a control board, which is equipped with a processor with internal memory.

The control board is also equipped with an adapter for radio network reception, which ensures wireless connection of the module with a computer or mobile platform in which the software in the form of a mobile application is installed.

The module hardware is also equipped with connections that allow the connection of up to three electronic flow meters.

One connection provides a connection of flowmeter for measuring the flow of hot water, then the second connection of flowmeter for measuring cold water. The third connection provides a connection of flowmeter which measures the flow of waste water.

The processor of the module has an internal memory, at the same time on the basis of the created software it constructs a protocol which can - among other things - check the date and exact time of connection or disconnection of individual flow meters, which ensures a certain regularity of measured values.

The design of the module allows the connection of various types of electronic flow meters, and is therefore a universal device, providing the consumer with a certain variability of use.

The module solved in this way can evaluate data on water and sewage using the created software in the form of a web application, or the module allows the consumer a transparent view of hot and cold water consumption and also allows comparison and calculation if the consumption corresponds to a amount waste water of which the certain fees are set.

The module can also be used when connecting only one or two flowmeters.

The measured values will then be transmitted wirelessly and displayed via a mobile platform.

The control board of the module is also equipped with clamps for connecting battery power and is also equipped with connectivity, allowing you to power the entire system from a common 230V mains.

### Brief description of drawings

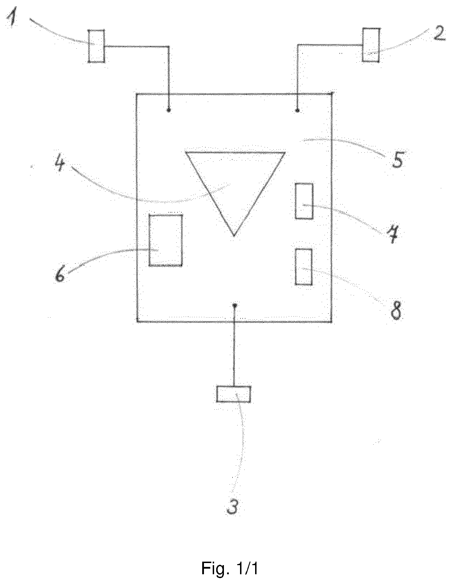

The technical solution will be explained in more detail with the help of the drawing, where Fig. 1 schematically shows the assembly of the module and the interconnection of individual components.

### Modes for carrying out the invention

The module consists of a control board 5, which is equipped with a processor 4 with internal memory, the purpose of which is to calculate and process data on the basis of the created software.

Control board 5 is also equipped with an adapter 6 for a radio network reception, which has the purpose of wireless connection module with a computer or mobile platform in which software is created in the form of mobile applications.

The module is further provided with a connection 1 of the control board 5, for the connection of a hot water flow meter.

Furthermore, the control board 5 of the_module is equipped with a connection 2 for connecting a flow meter for measuring cold water and also with a connection 3 for connecting a flow meter for measuring waste water.

The control board 5 is additionally provided with clamps 7 for the possibility of supplying the module with a battery source and furthermore the control board 5 is equipped with a connection 8 enabling to supply the whole system with electrical voltage from a common 230 V network.

### Industrial applicability

This technical device can be used for water measurement.

## Claims

1. Module for wireless data transmission from flow meters, **characterized in that it** consists of a control board (5) equipped with a processor (4) for data processing and calculation based on created software, where the processor (4) includes internal memory, further equipped with an adapter (6) for radio network reception and for wireless connection of the module with a computer or mobile platform in which software in the form of a mobile application is installed, the control board (5) of the module is further equipped with connection (1) for connection of hot water flow meter, connection (2) for connection of cold water flow meter and connection (3) for connection of waste water flow meter, the control board (5) is further provided with clamps (7) for powering the module with a battery source and a connection (8) for powering the whole system with electrical voltage from a common 230V mains.
